# EUROPEAN PATENT APPLICATION

(11) **EP 2 659 790 A1**
(43) Date of publication of application: **06.11.2013**
(21) Application number: 11853185.4
(22) Date of filing: 22.12.2011
(51) Int. Cl.: A23L 1/30, A23G 3/34, A23L 1/06

(54) **FOOD CONTAINING MILK CERAMIDE, AND PROCESS FOR PRODUCTION THEREOF**

(30) Priority: 27.12.2010 JP 2010291010
(71) Applicant: Megmilk Snow Brand Co., Ltd., Sapporo-shi Hokkaido 065-0043 (JP)
(72) Inventor: UEDA, Noriko, Sapporo-shi Hokkaido 065-0043 (JP); HIRAMATSU, Kazuhiko, Sapporo-shi Hokkaido 065-0043 (JP); UENO, Hiroshi, Sapporo-shi Hokkaido 065-0043 (JP); KATOH, Ken, Sapporo-shi Hokkaido 065-0043 (JP); MURAKAMI, Keiko, Sapporo-shi Hokkaido 065-0043 (JP); KUBO, Shigeyuki, Sapporo-shi Hokkaido 065-0043 (JP)
(74) Representative: Wakerley, Helen Rachael
(86) International application number: PCT/JP2011/079818
(87) International publication number: WO 2012/090860

(57) **Abstract**

Provided is a food containing milk ceramide that solves the problems of sedimentation and non-uniformity within the food. Also provided is a process for producing the food. Milk ceramide is transformed into a paste and added to a food. In this manner, it become possible to add 0.3-10.0% of milk ceramide to a good homogeneously without causing precipitation. Thus, a food can be provided, which contains milk ceramide homogenously in such an amount that cannot be achieved by conventional techniques without causing sedimentation.

## Description

### TECHNICAL FIELD

The present invention relates to a milk ceramide-rich food and a method for producing the same.

### BACKGROUND ART

Ceramide is one of the components that form the stratum corneum in the epidermis. It has been reported that dietary ceramide material improved the water holding capacity and permeability barrier function in the epidermis. Therefore, ceramide has attracted attention and has been increasingly demanded as a beauty material that produces healthy skin as well as collagen and hyaluronic acid. A material that contains glucosylceramide extracted from plants (e.g., rice, Amorphophallus konjac, corn or wheat) and a material that contains sphingomyelin extracted from milk (e.g., bovine milk or butter) have been marketed as a ceramide material used for foods.

Glucosylceramide and sphingomyelin are hydrolyzed to ceramide in epidermal cells. It has been known that sphingomyelin is a precursor of ceramide 2 that contributes a skin barrier function (Non-patent Document 1). A material that contains milk-derived sphingomyelin is referred to as milk ceramide. The term "milk ceramide" used herein refers to a mixture of milk phospholipid (lipid), carbohydrate and protein, wherein the milk phospholipid comprises milk-derived sphingomyelin in an amount of 5% or more.

It has been found that oral administration of milk ceramide made stratum corneum hydration and ceramide contents increase, and the epidermal water loss decrease by animal experiments using hairless mice (Non-patent Document 2). Moreover, in the clinical test, it has been reported that the daily intake of 20 mg/day or more milk ceramide improved the stratum corneum hydration (Patent Document 1).

A sphingomyelin-rich material that scarcely contains carbohydrates and proteins is known. However, it is necessary to use an organic solvent (e.g. ethanol) in order to increase the purity of sphingomyelin, in general, and thus issues of safety arise. Moreover, the effect of maintaining healthy skin achieved by oral intake of the material is not necessarily satisfactory. It is considered that it is desirable to add milk ceramide to a food in an amount of 2 to 10,000 mg so that an adult can take milk ceramide in an amount of 20 mg/day or more. However, since it is necessary to take a large amount of a food itself when the food has a low milk ceramide content, it has been desired to increase the milk ceramide content as much as possible.

In recent years, various types of products such as a drink, a tablet, and a jelly have been distributed for taking a beauty material. In particular, a tablet and a candy are very popular as a supplement that can be easily taken, and several products thereof that contain glucosylceramide or milk ceramide have been put on the market. However, since the amount of glucosylceramide or milk ceramide contained in such a food is as low as 0.6 to 1.2 mg, it is necessary to take a large amount of the food itself. On the other hand, when milk ceramide is added at a high concentration to a food having a high sugar content and a low water content (e.g., gummy candy) in order to reduce the amount of intake, the material may precipitate or may not be uniformly dispersed in the food due to its low solubility.

### RELATED-ART DOCUMENT

### PATENT DOCUMENT

Patent Document 1: JP 2008-184428 A

### NON-PATENT DOCUMENT

Non-patent Document 1: Uchida et al., J. Lipid Res., 41, pp. 2071-2082, 2000
Non-patent Document 2: Haruta et al., Biosci. Biotechnol. Biochem., 72, pp. 2151-2157, 2008

### SUMMARY OF THE INVENTION

### PROBLEM TO BE SOLVED

An object of the present invention is to provide a milk ceramide-rich food and a method for producing the same that prevent precipitation and non-uniformity in a food. Especially, an object of the present invention is to provide a milk ceramide-rich food (e.g., gummy candy) that has a high sugar content and contains milk ceramide in an amount of 0.3% or more.

### MEANS FOR SOLVING PROBLEM

The inventors conducted extensive studies in order to achieve the above objects. As a result, the inventors found that milk ceramide can be uniformly added to a food without any precipitation by forming a milk ceramide paste and then adding it to a food, and consequently the present invention was completed.

Accordingly, the present invention includes the following aspects.
(1) A food characterized by having a water content of 2 to 30% and containing milk ceramide in an amount of 0.3 to 10.0%.
(2) The food according to (1), characterized by having a solid content of 70 to 98%.
(3) The food according to (1) or (2), characterized by having a sugar content of 70% or more.
(4) The food according to any one of (1) to (3), characterized in that the food is produced by adding a milk ceramide paste as a raw material, wherein the milk ceramide paste is prepared by mixing and stirring the milk ceramide and an acidifier.
(5) The food according to (4), characterized in that the milk ceramide paste has a pH value of 1.7 to 4.
(6) The food according to any one of (1) to (5), characterized in that the milk ceramide has a protein content of 15 to 35% by dry weight and a lipid content of 45 to 65% by dry weight, and has a milk-derived phospholipid content in total lipids of 15% by dry weight or more.
(7) A gummy candy characterized by containing milk ceramide in an amount of 0.3 to 10.0%.
(8) The gummy candy according to (7), characterized in that the milk ceramide has a protein content of 15 to 35% by dry weight and a lipid content of 45 to 65% by dry weight, and has a milk-derived phospholipid content in total lipids of 15% by dry weight or more.
(9) A method for producing the food or the gummy candy according to any one of (1) to (8), characterized in that the method comprises adding a milk ceramide paste as a raw material, wherein the milk ceramide paste is prepared by mixing and stirring milk ceramide and an acidifier.
(10) A milk ceramide paste characterized by containing milk ceramide, an acidifier and water.
(11) The milk ceramide paste according to (10), characterized by containing 15 to 50 parts by weight of the milk ceramide, 5 to 30 parts by weight of the acidifier and 20 to 80 parts by weight of water.
(12) The milk ceramide paste according to (10) or (11), characterized in that the acidifier is one or more than one selected from the group consisting of citric acid, malic acid, acetic acid and lactic acid.

### EFFECTS OF THE INVENTION

According to the present invention, it is possible to provide a food that contains larger amount of milk ceramide than ever in a uniform state without any precipitation.

### DESCRIPTION OF EMBODIMENTS

The embodiments of the present invention may be applied to a food having a water content of 2 to 30% and a solid content of 70 to 98% (e.g., gummy candy, caramel and candy). A food having a water content of more than 30% is out of the scope of the present invention since the material added to such a food does not undergo precipitation or the like due to its high solubility.

Milk ceramide used in the present invention is a mixture of milk phospholipid (lipid), carbohydrate and protein, wherein the milk phospholipid comprises milk-derived sphingomyelin. Commercially available milk ceramide (e.g., "Milk Ceramide MC-5" manufactured by Megmilk Snow Brand Co., Ltd.) or milk ceramide prepared by a known method may be used as the milk ceramide of the present invention.

Milk ceramide may be prepared, for example, by adjusting the pH value of butter serum or a butter serum powder reconstituted liquid to 4.0 to 5.0, adding calcium chloride thereto to promote aggregation of proteins, removing the resulting precipitate, concentrating the supernatant liquid by ultrafiltration or microfiltration and drying the obtained concentrate (JP 2007-89535 A), or adjusting the pH value of buttermilk or a buttermilk powder reconstituted liquid to the acidic region, subjecting the buttermilk or the buttermilk powder reconstituted liquid to isoelectric precipitation, removing the resulting protein precipitate, concentrating the supernatant liquid by microfiltration and drying the obtained concentrate (Japanese Patent No. 3103218).

The milk ceramide used in the present invention contains protein by 15 to 35% by dry weight, lipid by 45 to 65% by dry weight, wherein the content of milk-derived phospholipid in total lipids is 15% by dry weight or more.

A milk ceramide-containing food according to the present invention contains the milk ceramide in an amount of 0.3 to 10.0%. When the milk ceramide is added in an amount of 0.3% or more to a food having a water content of 2 to 30% and a solid content of 70 to 98%, precipitation or non-uniform material dispersion may occur due to its low solubility.

The present invention prevents the above problem by mixing an acidifier with milk ceramide, dissolving the mixture in a small amount of water with stirring to obtain a homogenous milk ceramide paste and adding the milk ceramide paste to a food. An acidifier that is generally used (e.g., citric acid, malic acid, acetic acid and lactic acid) may be used as the acidifier of the present invention. In particular, a very homogenous milk ceramide paste can be obtained by using citric acid (including citric anhydride and citric monohydrate), which exhibits a high chelate effect.

The milk ceramide paste of the present invention contains 15 to 50 parts by weight of the milk ceramide, 5 to 30 parts by weight of the acidifier and 20 to 80 parts by weight of water, based on 100 parts by weight of the milk ceramide paste. It is desirable that the temperature of the milk ceramide paste should be 70°C or less. The milk ceramide paste can be uniformly dispersed or dissolved in a food having a high sugar content and a high solid content by using the preliminarily stirred milk ceramide paste.

According to the present invention, a milk ceramide-rich gummy candy may be produced by adding the milk ceramide paste in an amount of 0.6 to 30 parts by weight based on 100 parts by weight of a candy base. The candy base is not particularly limited as long as the candy base is generally used for a gummy candy. Examples of the candy base include a mixture that contains gelatin, a gelling agent and saccharide that are used as the main raw materials. Any gelatin that is generally used for a gummy candy may be used: for example, extracts from skin or bone of cattle, a pig, a chicken, a fish or the like. The texture of gelatin varies depending on the treatment method (e.g., acid treatment or alkali treatment) and the bloom value, and any gelatin may be used in accordance with the desired texture.

Examples of the gelling agent include pectin, agar, carrageenan, guar gum, tamarind gum, gellan gum, tara gum, locust bean gum and the like. These gelling agents may be used either alone or in combination. Examples of the saccharide include monosaccharides (e.g., glucose and fructose), disaccharides (e.g., sucrose and malt sugar), oligosaccharides (e.g., raffinose and stachyose), saccharides in which two glucose units are bonded at the reducing end (e.g., trehalose), sugar alcohols (e.g., maltitol, sorbitol, xylitol, erythritol, reduced starch hydrolyzate, reduced xylooligosaccharide, palatinit and reduced branched oligosaccharide) and mixed sugars (e.g., starch syrup).

Since the milk ceramide paste exhibits high solubility, the milk ceramide can be mixed at a high concentration into a food having a high sugar content and a low water content (e.g., gummy candy, caramel or candy) without any precipitation or material non-uniformity. Since the milk ceramide is uniformly dispersed in the resulting food, a possibility of burning of the food during production is suppressed and the flavor of the food is improved. Moreover, the food can be produced by a normal production process without special equipment. Since various flavors and colorants can be subsequently added to the food, it is possible to produce a wide variety of foods.

### EXAMPLES

The invention is further described below by way of examples. Note that the invention is not limited to the following examples. Percentage (%) indicates percent by weight (wt%).

### Example 1

### Preparation of milk ceramide paste

110 g of citric acid (anhydrous) was added to 250 g of milk ceramide, and the mixture was manually stirred to obtain a powder mixture. The powder mixture was added to a mixer ("TK ROBO MICS" manufactured by Tokushu Kika Kogyo CO., Ltd.) that was charged with 375 g of distilled water (20°C) with stirring at 5000 rpm. After completion of the addition, the mixture was stirred for 5 minutes to obtain 735 g of a milk ceramide paste having a pH value of 2.2 (Example Product 1).

### Comparative Example 1

485 g of distilled water (20°C) was added to 250 g of milk ceramide, and the mixture was stirred at 4500 rpm for 5 minutes using a mixer ("TK ROBO MICS" manufactured by Tokushu Kika Kogyo CO., Ltd.) to obtain 735 g of a milk ceramide mixture having a pH value of 5.0 (Comparative Example Product 1).

### Test Example 1

### Evaluation of solubility

50 g of Example Product 1 or Comparative Example Product 1 was added to 250 g of hot water (70°C), and the mixture was stirred for 2 minutes using a whisk. The mixture was passed through a sieve having a pore size of 900 µm, and the presence or absence of aggregates remaining on the sieve was visually observed. The solubility was evaluated in four levels based on the number of aggregates remaining on the sieve (3 points: no aggregates were observed; 2 points: 10 or less aggregates were observed; 1 point: exceeding 10 and 20 or less aggregates were observed; 0 point: exceeding 30 aggregates were observed). It was determined that an excellent milk ceramide mixture was obtained when the number of aggregates remaining on the sieve was 10 or less.

### Evaluation of dispersion state

Example Product 1 or Comparative Example Product 1 was added in an amount of 10% to starch syrup whose viscosity was adjusted to 20 dPas with heat, and the mixture was stirred at 75 rpm for 10 minutes using a three-one motor (manufactured by HEIDON). After completion of stirring, the dispersion state was visually observed. The dispersion state was evaluated by three raters. The dispersion state was evaluated in three levels (2 points: the milk ceramide paste was uniformly dispersed in the starch syrup; 1 point: mass of the milk ceramide paste was partially suspended on the surface of the starch syrup; 0 point: mass of the milk ceramide paste was suspended on the surface of the starch syrup or precipitated), and the average points were calculated. The dispersibility (dispersion state) was evaluated as good when the average point was 2 or more. The results are shown in Table 1.

**TABLE 1**

| Sample | Solubility | Dispersibility |
|---|---|---|
| Example Product 1 | 3 points | 2 points |
| Comparative Example Product 1 | 0 point | 0 point |

### Example 2

### Production of gummy candy

Starch syrup (40%), sugar (35%) and water (5%) were sufficiently mixed, and water was evaporated by heating the mixture. After the addition of a 35% gelatin solution, the mixture was sufficiently mixed to obtain a gummy mix. The milk ceramide paste (10%) obtained in Example 1 was then added to the gummy mix. After the addition of a fruit juice, a fragrance and a colorant, the sugar content of the mixture was adjusted to 80 to obtain a gummy candy mix. A starch mold was charged with the gummy candy mix, and the gummy candy mix was dried overnight. The dried product was removed from the mold and coated to obtain a gummy candy (Example Product 2).

### Comparative Example 2

### Production of gummy candy

Starch syrup (40%), sugar (35%) and water (5%) were sufficiently mixed, and water was evaporated by heating the mixture. After the addition of a 35% gelatin solution, the mixture was sufficiently mixed to obtain a gummy mix. The milk ceramide mixture (10%) obtained in Comparative Example 1 was then added to the gummy mix. After the addition of a fruit juice, a fragrance and a colorant, the sugar content of the mixture was adjusted to 80 to obtain a gummy candy mix. A starch mold was charged with the gummy candy mix, and the gummy candy mix was dried overnight. The dried product was removed from the mold and coated to obtain a gummy candy (Comparative Example Product 2).

### Test Example 2

The content of milk ceramide-derived sphingomyelin (SPM) in Example Product 2 and Comparative Example Product 2 (gummy candy) was measured by high-performance liquid chromatography, and a variation (coefficient of variation) in sphingomyelin content was calculated. The coefficient of variation was calculated by dividing the standard deviation by the arithmetic mean value. The results are shown in Table 2.

**TABLE 2**

| Sample | Coefficient of variation of SPM content |
|---|---|
| Example Product 2 | 3% |
| Comparative Example Product 2 | 14% |

As shown in Table 1, Example Product 1 exhibited excellent solubility and excellent dispersibility. As shown in Table 2, Example Product 2 exhibited a small variation in sphingomyelin content, which indicates that the milk ceramide was uniformly mixed into the gummy candy having a high sugar content and a low water content. In contrast, the milk ceramide mixture (Comparative Example Product 1) prepared using only water exhibited poor solubility and poor dispersibility. The coefficient of variation of the SPM content in Comparative Example Product 2 (gummy candy) exceeded 14%, which indicates that dispersibility in the gummy candy was non-uniform.

### Example 3

144 g of a 50% acetic acid solution was added to 100 g of milk ceramide, and the mixture was manually stirred to obtain 244 g of a milk ceramide paste having a pH value of 4.0 (Example Product 3).

### Test Example 3

50 g of Example Product 3 (milk ceramide paste) was added to 250 g of hot water (70°C), and the mixture was stirred for 2 minutes using a whisk. The mixture was passed through a sieve having a pore size of 900 µm, and the presence or absence of aggregates remaining on the sieve was visually observed. The number of aggregates remaining on the sieve was 10.

### Example 4

240 g of a 50% malic acid solution was added to 200 g of milk ceramide, and the mixture was manually stirred to obtain 440 g of a milk ceramide paste having a pH value of 3.0 (Example Product 4).

### Test Example 4

50 g of Example Product 4 (milk ceramide paste) was added to 250 g of hot water (70°C), and the mixture was stirred for 2 minutes using a whisk. The mixture was passed through a sieve having a pore size of 900 µm, and the presence or absence of aggregates remaining on the sieve was visually observed. The number of aggregates remaining on the sieve was 3.

### Example 5

1100 g of citric acid was added to 2500 g of milk ceramide, and the mixture was manually stirred to obtain a powder mixture. A powder-dissolving machine was charged with 3750 g of hot water (70°C), and the powder mixture was added thereto with stirring. After completion of the addition, the mixture was stirred for 8 minutes to obtain a milk ceramide paste having a pH value of 2.1 (Example Product 5).

### Example 6

### Production of caramel

Sugar (30%), starch syrup (30%) and cow milk (10%) were put in a vessel to dissolve the material sufficiently. After the addition of condensed milk (2.5%), an emulsifier (0.2%) and the milk ceramide paste (4.8%) obtained in Example 1 to the vessel, the mixture was sufficiently mixed. After heating and concentrating the mixture, the mixture was poured onto a cooling plate and rolled out to a thickness of 1.5 cm using a roller. The resulting product was cut into dice and wrapped to obtain a milk ceramide-containing caramel according to the present invention.

### Example 7

### Production of candy

Granulated sugar (43%), starch syrup (50%) and water (5%) were preliminarily dissolved at 60°C. After the addition of the milk ceramide paste (0.6%) obtained in Example 4, the mixture was mixed and dehydrated under reduced pressure. The resulting candy dough was poured into a cooling batch and formed in the shape of a rope. The resulting product was formed into a spherical shape (1.5 g) and cooled to obtain a milk ceramide-containing candy according to the present invention.

### INDUSTRIAL APPLICABILITY

The present invention thus provide various types of milk ceramide-containing foods (e.g., gummy candy, caramel and candy) that have a water content of 2 to 30% and that contain larger amount of milk ceramide than ever in a uniform state without any precipitation.

## Claims

1. A food **characterized by** having a water content of 2 to 30% and containing milk ceramide in an amount of 0.3 to 10.0%.

2. The food according to Claim 1, **characterized by** having a solid content of 70 to 98%.

3. The food according to Claim 1 or 2, **characterized by** having a sugar content of 70% or more.

4. The food according to any one of Claims 1 to 3, **characterized in that** the food is produced by adding a milk ceramide paste as a raw material, wherein the milk ceramide paste is prepared by mixing and stirring the milk ceramide and an acidifier.

5. The food according to Claim 4, **characterized in that** the milk ceramide paste has a pH value of 1.7 to 4.

6. The food according to any one of Claims 1 to 5, **characterized in that** the milk ceramide has a protein content of 15 to 35% by dry weight and a lipid content of 45 to 65% by dry weight, and has a milk-derived phospholipid content in total lipids of 15% by dry weight or more.

7. A gummy candy **characterized by** containing milk ceramide in an amount of 0.3 to 10.0%.

8. The gummy candy according to Claim 7, **characterized in that** the milk ceramide has a protein content of 15 to 35% by dry weight and a lipid content of 45 to 65% by dry weight, and has a milk-derived phospholipid content in total lipids of 15% by dry weight or more.

9. A method for producing the food or the gummy candy according to any one of Claims 1 to 8, **characterized in that** the method comprises adding a milk ceramide paste as a raw material, wherein the milk ceramide paste is prepared by mixing and stirring milk ceramide and an acidifier.

10. A milk ceramide paste **characterized by** containing milk ceramide, an acidifier and water.

11. The milk ceramide paste according to Claim 10, **characterized by** containing 15 to 50 parts by weight of the milk ceramide, 5 to 30 parts by weight of the acidifier and 20 to 80 parts by weight of water.

12. The milk ceramide paste according to Claim 10 or 11, **characterized in that** the acidifier is one or more than one selected from the group consisting of citric acid, malic acid, acetic acid and lactic acid.
